# EUROPÄISCHE PATENTSCHRIFT

(11) **EP 1 044 591 B1**
(45) Veröffentlichungstag und Bekanntmachung des Hinweises auf die Patenterteilung: **21.11.2007**
(21) Anmeldenummer: 00107566.2
(22) Anmeldetag: 07.04.2000
(51) Int. Cl.: B62D 49/00, G05B 15/02, G05B 19/42, A01B 63/00, E02F 9/20

(54) **Funktionsmanagementsystem für Fahrzeuge**
Function management system for vehicles
Système de gestion de la fonction pour véhicules

(30) Priorität: 14.04.1999 US 291080
(43) Veröffentlichungstag der Anmeldung: 18.10.2000
(73) Patentinhaber: DEERE & COMPANY, Moline, Illinois 61265-8098 (US)
(72) Erfinder: Falck, Peter Leslie, Waterloo, IA 50702 (US); Goodnight, Trent Lynn, Waterloo, IA 50701 (US); Lang, Stephen Paul, New Hartford, IA 50660 (US); Newendorp, Bruce Craig, Cedar Falls, IA 50613 (US); Youngblood, Michael Owen, Cedar Falls, IA 50613 (US); Kittle, Carl Edwin, Cedar Falls, IA 50613 (US)
(74) Vertreter: Lau-Loskill, Philipp

(56) Entgegenhaltungen:
- EP-A- 0 448 716
- EP-A- 0 838 141
- FR-A- 2 764 401
- GB-A- 2 279 774
- US-A- 4 628 454
- US-A- 5 050 771
- US-A- 5 359 517

## Beschreibung

Die Erfindung betrifft ein Funktionsmanagementsystem für Fahrzeuge, welches wenigstens eine Funktion aufweist, die bei fahrendem Fahrzeug in Abhängigkeit von Einstellungen an wenigsten einem, der Funktion zugeordneten Bedienungselement unter Verwendung einer Steuereinheit bestimmte Operationen ausführen kann.

Ein solches Funktionsmanagementsystem ist beispielsweise aus der US 5,050,771 bekannt.

Wenn sich ein landwirtschaftlicher Traktor über ein Feld bewegt, muß die Bedienungsperson gewöhnlich zusätzlich zum Lenken des Traktors, am Beginn oder Ende einer Erntereihe viele Operationen an Funktionen ausführen, wie beispielsweise Anheben und Absenken einer Anbaueinrichtung für Anbaugeräte, Umschalten des Getriebes, Einschalten oder Ausschalten der Zapfwelle etc. Die Anzahl und Komplexität dieser Aufgaben kann zur Ermüdung der Bedienungsperson und zu Bedienungsfehlern führen. Es ist ein System wünschenswert, das die an die Bedienungsperson gestellten Anforderungen vermindert.

Die der Erfindung zugrunde liegende Aufgabe wird darin gesehen, ein Funktionsmanagementsystem der eingangs genannten Art anzugeben, durch welches die vorgenannten Probleme überwunden werden. Insbesondere soll das Funktionsmanagement die Bedienung eines Arbeitsfahrzeugs, wie beispielsweise eines landwirtschaftlichen Traktors, vereinfachen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Ein Traktor enthält verschiedene funktionelle Systeme, auch Funktionen genannt, wie ein Lastschaltgetriebe, eine Anhängevorrichtung mit einem Anhängevorrichtungssteuergerät, eine Zapfwelle, mehrere Zusatzsteuerventile usw., die durch eine Steuereinheit in Abhängigkeit ermittelter Parameter sowie in Abhängigkeit von der Einstellung von Bedienungselementen, wie Schalter und Hebel, die eine Bedienungsperson betätigt, gesteuert werden. Erfindungsgemäß enthält die Steuereinheit einen Lernmodus, der betriebsfähig ist, während sich das Fahrzeug bewegt. Während der Ausführung des Lernmodus führt die Bedienungsperson eine Sequenz von Handhabungen (Manipulationen) an den Steuereinrichtungen aus, und die Steuereinheit speichert Informationen, die mit den Sequenzen im Zusammenhang stehen zusammen mit Informationen, die mit den Distanzen in Zusammenhang stehen, die der Traktor zwischen zwei Operationen zurückgelegt hat. Die Steuereinheit weist auch einen Ausführ- oder Wiederholmodus auf, in dem sie automatisch die gespeicherte Arbeitssequenz ausführt, so daß die Arbeitssequenz bei den gleichen Abstandsintervallen ausgeführt werden, bei welchen sie gelernt wurden, und zwar unabhängig von der Fahrzeuggeschwindigkeit.

Durch das erfindungsgemäße Funktionsmanagement lassen sich die an eine Bedienungsperson gestellten Bedienungsanforderungen für ein Arbeitsfahrzeug, wie beispielsweise einen landwirtschaftlichen Traktor, erheblich herabsetzen. Das erfindungsgemäße Funktionsmanagementsystem ist in der Lage, verschiedene Arbeitssequenzen von Funktionsoperationen zu erlernen und abzuspeichern und solche erlernten Operationen auf Befehl auszuführen und zu wiederholen. Die Operationen werden in Abhängigkeit von Fahrdistanzen des Fahrzeugs erlernt, so daß sich die Arbeitssequenzen bei denselben zwischenliegenden Abstandsverhältnissen automatisch, so wie sie erlernt wurden, wiederholen lassen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das schematische Diagramm eines erfindungsgemäßen Funktionsmanagementsystems für Fahrzeuge,
- Fig. 2: die Ansicht einer Vorderwand mit einer Fahrzeug-Monitor/Display-Einheit,
- Fig. 3: ein vereinfachtes logisches Flußdiagramm, welches die Betriebsweise eines Lern/Speicher-Modus der vorliegenden Erfindung illustriert, und
- Fig. 4: ein vereinfachtes logisches Flußdiagramm, welches die Betriebsweise eines Ausführungsmodus der vorliegenden Erfindung illustriert.

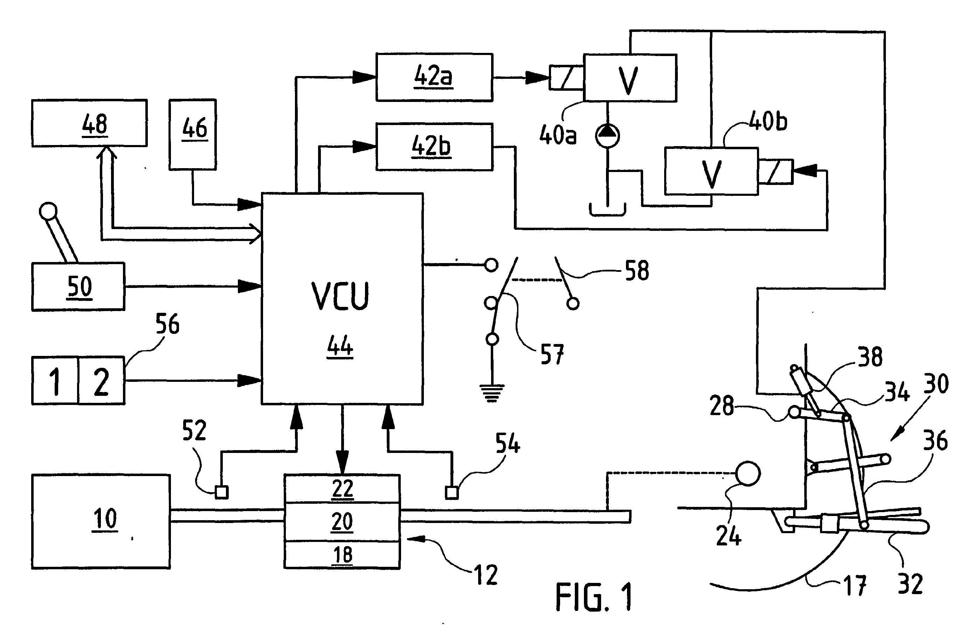

Das der Fig. 1 zugrunde liegende Fahrzeug ist beispielsweise ein im Handel erhältlicher John Deere Serientraktor der Serie 8000 und enthält eine Antriebsmaschine 10, welche eine Ausgangswelle antreibt, die ihrerseits ein Lastschaltgetriebe (PST) 12 antreibt, welches seinerseits eine Ausgangsantriebswelle antreibt, die mit den Antriebsrädern 17 des Fahrzeugs in Verbindung steht. Das Lastschaltgetriebe 12 enthält ein Getriebe 18, welches durch einen Satz von druckbetätigten Elementen oder Kupplungen 20 betätigt wird, die durch einen Satz zugehöriger elektromagnetisch betätigter Steuerventile 22 betätigt werden. Bei dem Lastschaltgetriebe 12 kann es sich um ein solches handeln, wie es in dem genannten John Deere Serientraktor verwendet wird. Es kann jedoch auch ein beliebiges elektronisch gesteuertes Getriebe mit ähnlichen Bedienungselementen sein. Die Ventile 22 können elektrohydraulisch betätigte Ventile, wie sie ebenfalls in dem John Deere Serientraktor verwendet werden, sein. Die Antriebsmaschine 10 treibt zusätzlich über eine nicht gezeigte Zapfwellenkupplung den nicht gezeigten Antrieb für eine übliche Zapfwelle (PTO) sowie eine Hydraulikpumpe an, die unter Druck stehende Hydraulikflüssigkeit an nicht gezeigte Zusatzsteuerventile liefert, was ebenfalls von dem John Deere Serientraktor bekannt ist. Ein derartiger Traktor kann beispielsweise auch eine schaltbare Differentialsperre und einen zuschaltbaren mechanischen Vorderradantrieb enthalten. Des weiteren können sich nicht gezeigte elektro-hydraulische Tiefensteuerzylinder auf dem nicht gezeigten, durch den Traktor gezogenen Anbaugerät befinden.

Eine Anbaugeräteeinrichtung, wie beispielsweise eine konventionelle 3-Punkt-Anbauvorrichtung, enthält Zugelemente (Unterlenker) 32 die über Hubstreben 36 mit Hubarmen 34 verbunden sind. Die Hubarme 34 sind derart mit einer Hubwelle 28 verbunden, daß eine simultane und gleiche Bewegung gewährleistet ist. Sie werden durch zwei parallel geschaltete Hubzylinder 38 angehoben bzw. abgesenkt. Der dargestellte Traktorausschnitt und die Anbauvorrichtung 30 sind lediglich exemplarisch dargestellt, es ist für Fachleute ersichtlich, daß die Erfindung auch bei Traktoren oder Anbauvorrichtungen anderer Konfiguration angewendet werden kann. Wie bekannt, können auf übliche Weise verschiedenartige nicht näher dargestellte bodenbearbeitende Anbaugeräte, beispielsweise ein Streichblechpflug oder ein Meißelscharpflug, an der Anbauvorrichtung 30 befestigt werden.

Das Lastschaltgetriebe 12, die Anbauvorrichtung 30, ein nicht gezeigter Zapfwellenantrieb, nicht gezeigte Zusatzsteuerventile, eine nicht gezeigte Differentialsperre, ein nicht gezeigter Frontantrieb und nicht gezeigte elektro-hydraulische Tiefensteuerzylinder sind Beispiele für verschiedene Typen von Funktionen oder Aktuatoren, die während des Traktorbetriebs, beispielsweise am Anfang oder Ende einer Erntereihe in gewünschter Reihenfolge (Sequenz) betätigt werden sollen.

Die Hydraulikflüssigkeitsverbindung zu und von den Zylindern 38 wird durch zwei elektro-hydraulische Durchflußsteuermagnetventile 40a und 40b gesteuert, die ihrerseits durch Treiber 42a und 42b gesteuert werden, welche von der Fahrzeugsteuereinheit (VCU) 44 erzeugte elektrische Steuersignale empfangen. Die VCU 44 ist vorzugsweise eine elektronische Steuereinheit auf Mikroprozessorbasis, wie sie bei John Deere Serientraktoren der Serie 8000 verwendet werden. Auch bei den Durchflußsteuerventilen 40a und 40b und den Treibern 42a und 42b kann es sich um Bauteile handeln, die bereits bei dem John Deere Serientraktor verwendet werden. Die VCU 44 steuert vorzugsweise auch eine nicht gezeigte Differentialsperre, einen nicht gezeigten mechanischen Vorderradantrieb, einen nicht gezeigten Zapfwellenantrieb, nicht gezeigte Zusatzsteuerventile, wie sie beispielsweise alle von dem John Deere Serientraktor bekannt sind.

Die VCU 44 empfängt Signale von einem federzentrierten Wippschalter 46, der drei Stellungen aufweist und dem Anheben und Absenken (H/S) des Anbaugerätes 30 dient, einer Fahrzeug-Monitor/Display-Einheit 48 und einer Gangschalteinheit 50, wie sie alle von dem John Deere Serienschlepper bekannt sind. Die VCU 44 empfängt auch Signale von einem Motordrehzahlsensor 52, vorzugsweise einem magnetischen Aufnehmer, und einem Achsdrehzahlsensor 54, vorzugsweise einem Halleffektsensor, der ein Achsdrehzahlsignal liefert. Die Komponenten 52 und 54 sind vorzugsweise den entsprechenden Komponenten des John Deere Serientraktors ähnlich. Es eignen sich jedoch auch entsprechende anderweitig im Handel erhältliche Komponenten. Die VCU 44 empfängt auch Signale von einem selbstzentrierenden Sequenzschalter 56, der zwischen einer ersten und einer zweiten Sequenz umschaltbar ist und als im Handel erhältlicher zwischen drei Positionen (1. Sequenz, 2. Sequenz und Neutral) umschaltbarer Momentwippschalter ausgebildet ist und in Verbindung mit vorliegender Erfindung verwendet wird. Die VCU 44 enthält einen Eingangs- und Ausgangskreis, einen programmierbaren Mikroprozessor und einen nicht dargestellten Speicher. Die VCU 44 empfängt auch Signale von einem Kupplungsschalter 57, der wirkungsmäßig mit dem Kupplungspedal 58 in Verbindung steht.

Zur manuellen Einstellung anderer nicht gezeigter Funktionen (wie sie beispielsweise oben erwähnt wurden), können auch weitere, nicht gezeigte Bedienungselemente vorgesehen sein, deren Signale von der VCU 44 ausgewertet werden.

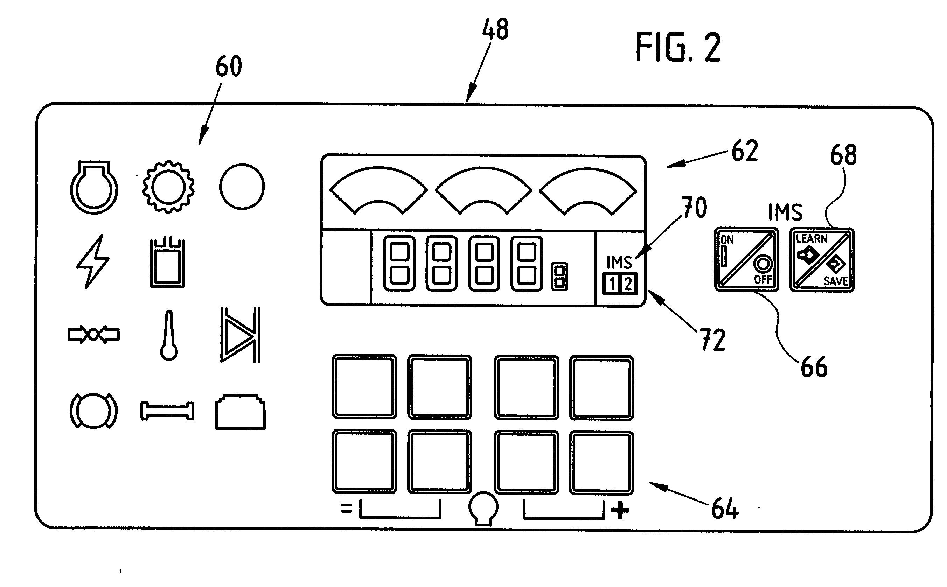

Die in Fig. 2 dargestellte Monitor/Display-Einheit 48 ist ähnlich der Monitor/Display-Einheit, die bei John Deere Serientraktoren der Serie 8000 verwendet werden, jedoch mit einigen Ergänzungen und/oder Änderungen wie noch beschrieben wird. Das linke Drittel der Monitor/Display-Einheit 48 enthält mehrere Warn- und Statuslampen 60, die verschiedenen Fahrzeugfunktionen zugeordnet sind, sich jedoch nicht unmittelbar auf die vorliegende Erfindung beziehen. Der obere, mittlere Bereich der Einheit 48 enthält ein Graphik- und Zahlendisplay 62. Der untere, mittlere Bereich der Einheit 48 enthält mehrere Berührungsflächenschalter 64 ("touch pad switches", die ebenfalls nicht zur vorliegenden Erfindung gehören), durch die sich einstellen läßt, welche Parameter durch den nummerischen Teil des Displays angezeigt werden sollen. Der obere Teil und untere Teil des rechten Drittels der Monitor/Display-Einheit 48 kann nicht näher dargestellte Berührungsflächenschalter enthalten, die nicht zu der vorliegenden Erfindung gehören. Die Einheit 48 enthält auch einen nicht dargestellten Lautsprecher, der in Abhängigkeit bestimmter Konditionen und Operationen akustische Signale abgibt.

Der mittlere Teil des rechten Drittels der Monitor/Display-Einheit 48 enthält einen Ein/Aus-Schalter 66 und einen Lern/Speicher-Schalter 68, die beide als Berührungsflächenschalter ("touch pad switch") ausgebildet sein können und die in Verbindung mit dem erfindungsgemäßen Funktionsmanagementsystem verwendet werden. Der untere rechte Teil des Displays 62 enthält ein Anzeigeelement 70 für ein Anhängevorrichtungsmanagementsystem IMS (Implement Management System) und ein Anzeigeelement 72 zur Anzeige der wirksamen Sequenz (1 oder 2). Die Anzeigeelemente 70, 72 leuchten in Abhängigkeit des Funktionsstatus entsprechend der vorliegenden Erfindung auf, wie noch beschrieben wird.

Um die vorliegende Erfindung ausführen zu können wird die VCU 44 entsprechend programmiert. Die programmierte VCU 44 leitet unter Verwendung bekannter Integrationstechniken von dem Drehzahl- oder Geschwindigkeitssensor 54 die erforderliche Abstandsinformation ab. Die programmierte VCU 44 arbeitet mit den in Fig. 1 und 2 gezeigten Elementen zusammen und implementiert dabei das erfindungsgemäße Funktionsmanagementsystem.

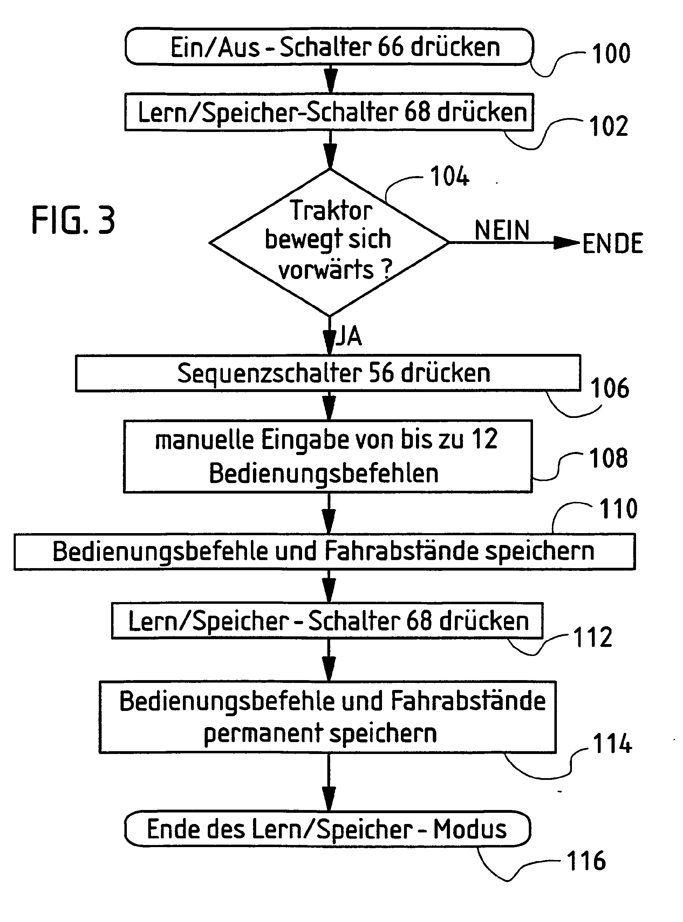

Gemäß Fig. 3 arbeitet der Lern/Speicher-Modus wie folgt: In Schritt 100 wird zunächst das System durch Drücken des Ein/Aus-Schalters 66 eingeschaltet und das IMS-Anzeigeelement 70 schaltet ein. Durch Drücken des Lern/Speicher-Schalters 68 aktiviert Schritt 102 den Lern/Speicher-Modus, das IMS-Anzeigeelement 70 beginnt zu blinken und alle zwei Sekunden ertönt ein akustisches Signal. Durch Schritt 104 wird der Lern/Speicher-Modus fortgesetzt, solange ein Vorwärtsgang am Getriebe 18 eingestellt ist und sich der Traktor schneller als eine Minimumgeschwindigkeit, beispielsweise 0,5 km/h bewegt. Wenn die Bedienungsperson während der Ausführung des Lern/Speicher-Modus das Getriebe 18 aus dem Vorwärtsgang schaltet, verläßt das Funktionsmanagementsystem den Lern/Speicher-Modus und bricht diesen ab. Die bis dahin ermittelten Sequenzen werden gelöscht. Bei Schritt 106 betätigt die Bedienungsperson vorübergehend den Sequenzschalter 56, um die Sequenz 1 oder die Sequenz 2 einzustellen. Die zugehörige Sequenznummer des Sequenzanzeigeelements 72 beginnt zu blinken. Dann kann die Bedienungsperson in Schritt 108 manuell eine Folge (Sequenz) von funktionellen Bedienungsbefehlen ausführen, die auf eine maximale Anzahl (beispielsweise 12) begrenzt sein können. Bei den Bedienungsbefehlen handelt es sich beispielsweise um das Schalten des Getriebes 18 durch Betätigen des Schalthebels 50, oder um das Anheben und/oder Absenken der Anbauvorrichtung 30 durch Betätigen des Hebe/Senk-Wippschalters 46. Die VCU 44 zeichnet in Schritt 110 (in einem temporären Speicher) alle manuell ausgeführten Operationen zusammen mit den zugehörigen Fahrabständen, die der Traktor zwischen den verschiedenen manuell ausgeführten Operationen zurückgelegt hat, auf.

Die Abstände werden unter Zugrundelegen der Achsdrehzahlen, die durch den Sensor 54 ermittelt werden, berechnet und mit einer Auflösung in Millimetern aufgezeichnet. Eine Abstandsinformation wird nur aufgezeichnet, wenn der Traktor sich in einem Vorwärtsgang befindet und sich schneller als eine minimale Geschwindigkeit bewegt. In Schritt 112 wird der Lern/Speicher-Schalter 68 erneut gedrückt, und durch Schritt 114 speichert die VCU 44 in einem permanenten Speicher die Bedienungssequenz und die zugehörigen Fahrabstände, sowie die Sequenznummer 1 oder 2, die davon abhängt, in welche Position der Schalter 56 vorher (Schritt 106) gedrückt wurde. Der Lern/Speicher-Modus endet dann mit Schritt 116, das Sequenzanzeigeelement 72 hört auf zu blinken und nur das IMS-Anzeigeelement 70 leuchtet weiter.

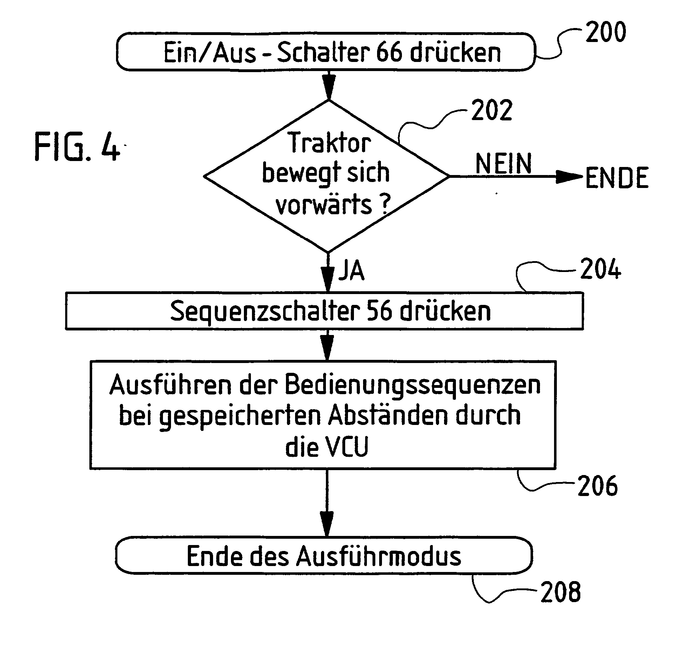

Nachdem eine oder zwei Sequenzen der Bedienungsbefehle und Fahrabstände durch den Lern/Speicher-Modus gelernt und gespeichert wurden, kann der in Fig. 4 dargestellte Ausführungsmodus eingeleitet werden. Mit Schritt 200 wird der Ein/Aus-Schalter 66 gedrückt, um das Funktionsmanagementsystem einzuschalten. Das IMS-Anzeigeelement leuchtet auf. Schritt 202 erlaubt den Ablauf des Ausführungsmodus, wenn das Getriebe 18 des Traktors sich in einem Vorwärtsgang befindet und der Traktor sich schneller als eine minimale Geschwindigkeit bewegt. Wenn der Traktor eine Feldposition erreicht, an der die Bedienungsperson die Ausführung einer gespeicherten Bedienungssequenz wünscht, drückt die Bedienungsperson den Sequenzschalter 56 vorübergehend in die Position der "1" oder in die Position der "2", um auszuwählen, welche der gespeicherten Sequenzen abgespielt werden soll. Dabei leuchtet die "1" oder die "2" des Sequenzanzeigeelements 72 auf und bleibt für wenigstens 3 Sekunden an, selbst wenn die auszuführende Sequenz weniger als 3 Sekunden beansprucht. Dann führt die VCU 44 in Schritt 206 automatisch die ausgewählte Sequenz der gespeicherten Bedienungsbefehle aus. Beispielsweise wird das Getriebe 18 automatisch umgeschaltet, ohne daß die Bedienungsperson den Gangschalthebel 50 betätigt, oder es wird die Anbauvorrichtung 30 automatisch angehoben und/oder abgesenkt, ohne daß die Bedienungsperson den Hebe/Senk-Wippschalter 46 betätigt. Die gespeicherten Bedienungsbefehle werden jeweils bei denselben relativen Distanzen ausgeführt, wie sie gelernt wurden, und zwar unabhängig davon, ob der Traktor bei der gleichen, einer geringeren oder einer höheren Geschwindigkeit fährt. Wenn die Sequenz vollständig ausgeführt ist, erlischt die "1" oder "2" des Sequenzanzeigeelements 72. Der Ausführungsmodus endet dann mit Schritt 208.

Mit zwei Lern-Sequenzen kann die Bedienungsperson bei eingeschaltetem Programm (sofern das Getriebe 18 des Traktors sich in einem Vorwärtsgang befindet und der Traktor sich schneller als eine minimale Geschwindigkeit bewegt) den Sequenzschalter 56 vorübergehend in seine Position "1" kippen, um die erste Sequenz beispielsweise am Ende jeder Erntereihe automatisch auszuführen. Auf entsprechende Weise kann die Bedienungsperson den Sequenzschalter 56 vorübergehend in seine Position "2" kippen, um beispielsweise am Beginn jeder Erntereihe die zweite Sequenz automatisch auszuführen.

Damit kann das hier beschriebene Funktionsmanagementsystem verwendet werden, um mit einer einzigen vorübergehenden Betätigung des Sequenzschalters 56 automatisch eine erste Bedienungssequenz am Anfang jeder Erntereihe und durch eine andere vorübergehende Betätigung des Sequenzschalters 56 automatisch eine andere zweite Bedienungssequenz am Ende jeder Erntereihe auszuführen. Da das Funktionsmanagementsystem nicht auf festen Zeitintervallen, sondern auf der Basis der zurückgelegten Fahrstrecken des Traktors basiert, können die Sequenzen langsam, d. h. bei geringen Traktorgeschwindigkeiten, "gelernt" werden und dann schneller, wenn der Traktor mit normalen Betriebsgeschwindigkeiten betrieben wird, abgespielt und ausgeführt werden. Dies gewährt der Bedienungsperson ausreichend Zeit zum Ausführen des Lernmodus, bei der die Steuereinheit 48 eine komplexe Bedienungssequenz erlernt.

Während der oben beschriebenen Operationen arbeitet das erfindungsgemäße Funktionsmanagementsystem darüber hinaus wie folgt: Wenn der Ein/Aus-Schalter 66 gedrückt wird, ertönt ein akustisches Signal. Wenn das Programm eingeschaltet wird, erscheint der Inhalt der gespeicherten Sequenzen auf der Monitor/Display-Einheit 48. Für jede Sequenz, beginnend mit Sequenz "1", wird jedes Ereignis im Takt von zwei Sekunden angezeigt, gefolgt von einer "Ende"-Anzeige auf dem Display 62.

Gelernte Sequenzen werden unbegrenzt festgehalten. Es kann eine maximale Anzahl von Operationen, beispielsweise 12, aufgezeichnet werden. Die Bedienungsperson kann eine gelernte Sequenz aus dem Speicher löschen. Wenn der Lern/Speicher-Modus während eines Lernprozesses abgebrochen wird, z. B. wenn die Sequenz nicht ordnungsgemäß abgeschlossen wurde, wird die Sequenz aus dem Speicher gelöscht. Eine gespeicherte Sequenz kann aus dem Speicher entfernt werden, indem der Lern/Speicher-Modus normal begonnen wird, die Sequenz ausgewählt wird und dann der Lern/Speicher-Schalter 68 betätigt wird, ohne daß manuell Fahrzeugbedienungsbefehle ausgeführt werden. Dies veranlaßt das Programm den Lern/Speicher-Modus zu verlassen und das Aufblinken der Sequenznummer zu unterbrechen, während das IMS-Anzeigeelement 70 weiterhin allein aufleuchtet.

Wenn der Lern/Speicher-Modus beendet ist kann kein Bedienungsbefehl zur Sequenz hinzugefügt werden. Die Distanzinformationen werden nur akkumuliert, wenn der Traktor schneller als eine minimale Geschwindigkeit nach vorn fährt.

Der Lern/Speicher-Modus kann auch gelöscht werden, indem der Ein/Aus-Schalter 66 betätigt wird und entweder a) innerhalb von 30 Sekunden keine Sequenz mit dem Sequenzschalter 56 ausgewählt wird, b) innerhalb von 30 Sekunden, nachdem der Sequenzschalter 56 betätigt werde, keine Bedienungsbefehle "gelernt" wurden, c) innerhalb von 30 Sekunden nach dem Lernen des ersten Betriebsbefehls der Lern/Speicher-Schalter 68 nicht betätigt wird, d) der Vorwärtsgang des Getriebes 18 verlassen wird oder e) die Bedienungsperson nicht anwesend ist und der Traktor sich länger als 5 Sekunden nicht bewegt hat.

Das IMS-Zustandsanzeigeelement 70 in dem Display 62 leuchtet auf, wenn das Programm in Betrieb ist. Wenn der Ein/Aus-Schalter 66 gedrückt wird, während das Funktionsmanagementsystem eingeschaltet ist, schaltet das Programm das Funktionsmanagementsystem ab und das IMS-Anzeigeelement 70 aus. Wenn der Ein/Aus-Schalter 66 gedrückt wird und der Sequenzschalter 56 sich nicht in seiner Neutralstellung befindet, dann wird das Funktionsmanagementsystem nicht eingeschaltet. Wenn sich das Programm bei ausgeschaltetem Funktionsmanagementsystem im Lern/Speicher-Modus befindet, wird der Lern/Speicher-Modus beendet und keine Sequenz gespeichert. Wenn das Programm bei ausgeschaltetem Funktionsmanagementsystem eine Sequenz ausführt oder wiederholt, wird die Ausführung der Sequenz abgebrochen.

Wenn der Lern/Speicher-Schalter 68 gedrückt wird, wird ein akustisches Signal (Piepton) abgegeben. Das IMS-Statusanzeigeelement 70 auf dem Display 62 blinkt während eines Lernmodus. Alle zwei Sekunden erzeugt die VCU 44 einen Piepton mit einer Dauer von 1/16 Sekunde. Wenn das Funktionsmanagementsystem nicht eingeschaltet ist, hat das Betätigen des Lern/Speicher-Schalters 68 keinen Effekt. Wenn der Lern/Speicher-Schalter 68 betätigt wird, während das Funktionsmanagementsystem in Betrieb ist, tritt das Programm in den Lern/Speicher-Modus ein.

Wenn das Funktionsmanagementsystem ausgeschaltet ist, hat die Betätigung des Sequenzschalters 56 keinen Effekt. Wenn das Funktionsmanagement aktiv ist und der Sequenzschalter 56 von Neutral entweder zur Sequenzpositon "1" oder zur Sequenzposition "2" übergeht, beginnt das Programm die Sequenz auszuführen oder zu wiederholen. Wenn der Sequenzschalter 56 gedrückt wird, während der Lernmodus aktiv ist, erlernt das Programm die manuell ausgeführten Betriebsbefehle.

Die Ausführung einer Sequenz beginnt immer mit der ersten Operation der Sequenz, selbst dann, wenn die Sequenz vorher abgebrochen wurde. Während des Ausführungsmodus führt das Programm immer die gelernten Bedienungsbefehle für eine Funktion aus. Wenn sich die Funktion bereits in dem Zustand befindet, der durch die gelernte Operation erreicht werden soll, hat das Programm keinen Einfluß auf die Funktion. Handelt es sich beispielsweise um einen Hebebefehl für die Anbauvorrichtung und diese ist bereits voll angehoben, so geht das Programm zur nächsten Operation der Sequenz über. Wenn die Sequenz bereits ausgeführt wird, während der Sequenzschalter 56 wieder in die entsprechende Sequenzposition gedrückt wird, wird das Betätigen des Sequenzschalters 56 ignoriert und die Sequenzausführung fortgesetzt. Wenn eine Sequenz bereits im Gange ist und dann der Sequenzschalter 56 in die andere Sequenzposition gedrückt wird, dann bricht das Programm die Ausführung der Sequenz ab. Wenn eine Funktion zur Zeit, wenn eine Sequenz aufgerufen wird, unwirksam ist, führt das Programm keine Sequenz aus.

Die Bedienungsperson kann das Kupplungspedal 58 verwenden, um das Programm daran zu hindern während eines Lern/Speicher-Modus Fahrdistanzen zu akkumulieren und um während der Ausführung einer gespeicherten Sequenz vorübergehend die automatische Ausführung eines Bedienungsbefehls zu unterbrechen. Sobald 30 Sekunden abgelaufen sind, wird die Sequenz unabhängig davon, ob die Kupplung eingerückt oder nicht eingerückt ist, abgebrochen. Das Programm verhindert auch die Ausführung einer Sequenz, wenn der Gang des Getriebes 18 über einem vorbestimmbaren maximalen Gang, beispielsweise dem 14. Vorwärtsgang, liegt, und zwar unabhängig davon, ob die Sequenz oberhalb dieses maximalen Ganges erlernt wurde.

Wenn die Bedienungsperson während der Ausführung einer automatischen Sequenz manuell eine Funktion betätigt, dann wird diese manuell betätigte Funktion (unter diesem Funktionsmanagementsystem) für den Rest der Ausführung der Sequenz gesperrt. Die anderen Operationen der Sequenz werden jedoch wie gelernt ausgeführt. Die besondere manuell betätigte Operation wird nicht aus der erlernten Sequenz gelöscht.

Alarmmeldungen, die sich auf Funktionen beziehen, die nicht in die ausgeführte Sequenz eingebunden sind, veranlassen das Funktionsmanagementsystem nicht, die Sequenzausführung abzubrechen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise das beschriebene Funktionsmanagementsystem auch dazu verwendet werden, Operationen zu erlernen und zu wiederholen, die eine Differentialsperre, einen mechanischen Vorderradantrieb, einen Zapfwelleantrieb (PTO), Zusatzsteuerventile (SCVs) und elektro-hydraulische Tiefensteuerzylinder, wie sie sich beispielsweise auf gezogenen Anbaugeräten befinden und die durch die Bedienungsperson vom Traktor aus betätigt werden können, betreffen.

## Patentansprüche

1. Funktionsmanagementsystem für Fahrzeuge, welches wenigstens eine Funktion aufweist, die bei fahrendem Fahrzeug in Abhängigkeit von Einstellungen an wenigsten einem, der Funktion zugeordneten Bedienungselement (46) unter Verwendung einer Steuereinheit (44) bestimmte Operationen ausführen kann, derart, daß die Steuereinheit (44) Mittel zur Ausführung eines Lernmodus aufweist, der sich bei fahrendem Fahrzeug ausführen läßt, wobei in Reaktion auf eine an dem wenigstens einen Bedienungselement (46) manuell vorgenommene Betätigungssequenz die wenigstens eine Funktion eine Operationssequenz ausführt, und wobei die Steuereinheit (44) einerseits Informationen bezüglich der Operationssequenz und andererseits Informationen bezüglich des Streckenintervalls, welche das Fahrzeug zwischen den einzelnen Operationen zurückgelegt hat, speichert, und derart daß die Steuereinheit (44) Mittel zur Ausführung eines Ausführungs- oder Wiedergabemodus aufweist, bei dessen Ausführung die Steuereinheit (44) automatisch die gespeicherte Operationssequenz ausführt, wobei die einzelnen Operationen der Operationssequenz bei Streckenintervallen ausgeführt werden, die unabhängig von der Fahrzeuggeschwindigkeit im wesentlichen den Streckenintervallen entsprechen, die während der Ausführung des Lernmodus auftraten, wobei ein durch die Bedienungsperson betätigbarer mit der Steuereinheit (44) verbundener Lern/Speicher-Schalter (68) vorgesehen ist, wobei die Steuereinheit (44) in Abhängigkeit einer ersten Betätigung des Lern/Speicher-Schalters (68) einen Lernmodus aktiviert, durch den die Steuereinheit (44) Informationen über die manuelle Ausführung der Sequenz aufzeichnet, und wobei die Steuereinheit (44) in Abhängigkeit einer zweiten Betätigung des Lern/Speicher-Schalters, nachdem die Sequenzinformationen aufgezeichnet sind, einen Speichermodus aktiviert, durch den die Informationen in einem permanenten Speicher der Steuereinheit (44) abgelegt werden, **dadurch gekennzeichnet, daß** die Steuereinheit (44) eine gespeicherte Sequenz aus ihrem Speicher löscht, wenn der Lern/Speicher-Schalter (68) zweimal betätigt wird, ohne daß in der Zwischenzeit manuelle Operationen vorgenommen wurden.

2. Funktionsmanagementsystem nach Anspruch 1, **dadurch gekennzeichnet, daß** das Funktionsmanagementsystem nur dann betriebsbereit ist, wenn sich das Fahrzeug über dem Terrain bewegt.

3. Funktionsmanagementsystem nach Anspruch 1 oder 2, **dadurch gekennzeichnet, daß** das Funktionsmanagementsystem nur dann betriebsbereit ist, wenn sich das Getriebe (18) des Fahrzeugs in einem Vorwärtsgang befindet.

4. Funktionsmanagementsystem nach einem der Ansprüche 1 bis 3, **dadurch gekennzeichnet, daß** ein manuell betätigbares mit der Steuereinheit (44) verbundenes Sequenzauswahlelement (56) vorgesehen ist, und daß die Steuereinheit (44) in Abhängigkeit des Zustandes des Sequenzauswahlelements (56) eine von mehreren gespeicherten bzw. gelernten Operationssequenzen auswählt.

5. Funktionsmanagementsystem nach einem der Ansprüche 1 bis 4, **dadurch gekennzeichnet, daß** ein durch die Bedienungsperson betätigbarer mit der Steuereinheit (44) verbundener Schalter (56) vorgesehen ist und daß die Steuereinheit (44) jedes Mal, wenn der Schalter (56) betätigt wird, automatisch eine Operationssequenz ausführt.

6. Funktionsmanagementsystem nach einem der Ansprüche 1 bis 5, **dadurch gekennzeichnet, daß** bei der Ausführung des Lernmodus in Reaktion auf eine an dem wenigstens einen Bedienungselement (46) manuell vorgenommene erste Betätigungssequenz die wenigstens eine Funktion eine erste Operationssequenz ausführt und die Steuereinheit (44) einerseits Informationen bezüglich der ersten Operationssequenz und andererseits Informationen bezüglich des Streckenintervalls, welche das Fahrzeug zwischen den einzelnen Operationen der ersten Operationssequenz zurückgelegt hat, speichert, und in Reaktion auf eine an dem wenigstens einen Bedienungselement (46) manuell vorgenommene zweite Betätigungssequenz die wenigstens eine Funktion eine zweite Operationssequenz ausführt und die Steuereinheit (44) einerseits Informationen bezüglich der zweiten Operationssequenz und andererseits Informationen bezüglich des Streckenintervalls, welche das Fahrzeug zwischen den einzelnen Operationen der zweiten Operationssequenz zurückgelegt hat, speichert.

7. Funktionsmanagementsystem nach einem der Ansprüche 4 bis 6, **dadurch gekennzeichnet, daß** der Schalter oder das Sequenzauswahlelement ein Wippschalter (56) ist, der aus einer mittleren Ruhelage in zwei Richtungen auslenkbar ist, um jeweils eine von zwei gespeicherten Operationssequenzen zu starten oder auszuwählen.

8. Funktionsmanagementsystem nach einem der Ansprüche 1 bis 7, **dadurch gekennzeichnet, daß** ein mit der Steuereinheit (44) in Verbindung stehendes Display (48, 62) vorgesehen ist, durch das sich die gespeicherten Sequenzinformationen darstellen lassen.

9. Funktionsmanagementsystem nach Anspruch 8, **dadurch gekennzeichnet, daß** die Steuereinheit (44) automatisch gespeicherte Sequenzinformationen auf dem Display (48, 62) anzeigt, wenn das Funktionsmanagementsystem eingeschaltet wird.

10. Funktionsmanagementsystem nach einem der Ansprüche 1 bis 9, **dadurch gekennzeichnet, daß** ein mit der Steuereinheit (44) in Verbindung stehender Schalter (57) vorgesehen ist und daß die Steuereinheit (44) die Speicherung von Sequenzinformationen unterbricht und/oder die automatische Ausführung der gespeicherten Sequenzen unterbricht, wenn der Schalter (57) betätigt wird.

11. Funktionsmanagementsystem nach Anspruch 10, **dadurch gekennzeichnet, daß** der Schalter (57) wirksam mit einem Kupplungspedal (58) des Fahrzeugs in Verbindung steht.

12. Funktionsmanagementsystem nach einem der Ansprüche 1 bis 11, **dadurch gekennzeichnet, daß** die Steuereinheit (44) die Ausführung einer ersten gelernten Sequenz abbricht, sobald ein Sequenzauswahlschalter in eine Stellung gebracht wird, durch die eine zweite gelernte Sequenz ausgewählt wird.

## Claims

1. Function management system for vehicles, which has at least one function which, when the vehicle is travelling can carry out operations which are determined using a control unit (44) as a function of settings on at least one operator control element (46) which is assigned to the function, in such a way that the control unit (44) has means for executing a learning mode which can be executed when a vehicle is travelling, wherein the at least one function executes an operation sequence in reaction to an activation sequence which is performed manually at the at least one operating control element (46), and wherein the control unit (44) stores both information relating to the operation sequence and information relating to the distance interval which the vehicle has covered between the individual operations, and in such a way that the control unit (44) has means for executing an execution mode or reproduction mode during whose execution the control unit (44) automatically executes the stored operation sequence, wherein the individual operations of the operation sequence are executed for distance intervals which, irrespective of the velocity of the vehicle, correspond essentially to the distance intervals which occurred during the execution of the learning mode, wherein a learn/save switch (68) which can be operated by the operator and is connected to the control unit (44) is provided, wherein the control unit (44) activates a learning mode as a function of a first activation of the learn/save switch (68), by means of which learning mode the control unit (44) records information about the manual execution of the sequence, and wherein the control unit (44) activates a save mode as a function of a second activation of the learn/save switch after the sequence information has been recorded, by means of which save mode information is stored in a permanent memory of the control unit (44), **characterized in that** the control unit (44) deletes a stored sequence from its memory if the learn/save switch (68) is activated twice without manual operations having been performed in the mean time.

2. Function management system according to Claim 1, **characterized in that** the function management system is operationally ready only if the vehicle is moving over the terrain.

3. Function management system according to Claim 1 or 2, **characterized in that** the function management system is operationally ready only if the gearbox (18) of the vehicle is in a forward gear speed.

4. Function management system according to one of Claims 1 to 3, **characterized in that** a sequence selection element (56) which can be activated manually and is connected to the control unit (44) is provided, and **in that** the control unit (44) selects, as a function of the state of the sequence selection element (56), one of a plurality of operation sequences which are saved or learnt.

5. Function management system according to one of Claims 1 to 4, **characterized in that** a switch (56) which can be activated by the operator and is connected to the control unit (44) is provided, and **in that** the control unit (44) automatically executes an operation sequence whenever the switch (56) is activated.

6. Function management system according to one of Claims 1 to 5, **characterized in that** when the learning mode is executed in reaction to a first activation sequence which is performed manually at the at least one operator control element (46), the at least one function executes a first operation sequence and the control unit (44) stores both information relating to the first operation sequence and information relating to the distance interval which the vehicle has covered between the individual operations of the first operation sequence, and the at least one function executes a second operation sequence in reaction to a second activation sequence which is performed manually at the at least one operator control element (46), and the control unit (44) stores both information relating to the second operation sequence and information relating to the distance interval which the vehicle has covered between the individual operations of the second operation sequence.

7. Function management system according to one of Claims 4 to 6, **characterized in that** the switch or the sequence selection element is a rocker switch (56) which can be deflected in two directions from a central position of rest in order to respectively start or select one of two stored operation sequences.

8. Function management system according to one of Claims 1 to 7, **characterized in that** a display (48, 62) which is connected to the control unit (44) and by means of which the stored sequence information can be represented is provided.

9. Function management system according to Claim 8, **characterized in that** the control unit (44) displays automatically stored sequence information on the display (48, 62) if the function management system is switched on.

10. Function management system according to one of Claims 1 to 9, **characterized in that** a switch (57) which is connected to the control unit (44) is provided, and **in that** the control unit (44) interrupts the storage of sequence information and/or interrupts the automatic execution of the stored sequences if the switch (57) is activated.

11. Function management system according to Claim 10, **characterized in that** the switch (57) is operatively connected to a clutch pedal (58) of the vehicle.

12. Function management system according to one of Claims 1 to 11, **characterized in that** the control unit (44) aborts the execution of a first learnt sequence as soon as a sequence selection switch is moved to a position which causes a second learnt sequence to be selected.

## Revendications

1. Système de gestion de fonctions pour véhicules, qui présente au moins une fonction, laquelle peut exécuter certaines opérations en utilisant une unité de commande (44) lorsque le véhicule roule en fonction de réglages effectués sur au moins un élément de commande (46) attribué à la fonction, de telle sorte que l'unité de commande (44) présente des moyens pour l'exécution d'un mode d'apprentissage qui peut être mis en oeuvre lorsque le véhicule roule, moyennant quoi au moins ladite fonction exécute une séquence d'opérations en réponse à une séquence d'actions effectuée manuellement sur le ou les éléments de commande (46), et l'unité de commande (44) stocke d'une part des informations concernant la séquence d'opérations et d'autre part des informations concernant l'intervalle de distance, que le véhicule a parcouru entre chaque opération, et de telle sorte que l'unité de commande (44) présente des moyens pour l'exécution d'un mode d'exécution ou de restitution, lors de l'exécution duquel l'unité de commande (44) exécute automatiquement la séquence d'opérations stockée, les opérations individuelles de la séquence d'opérations étant exécutées à intervalles de distance qui correspondent, indépendamment de la vitesse du véhicule, sensiblement aux intervalles de distance qui sont apparus pendant l'exécution du mode d'apprentissage, sachant qu'il est prévu un commutateur d'apprentissage et de stockage (68) pouvant être actionné par l'opérateur et relié à l'unité de commande (44), l'unité de commande (44) activant lors d'un premier actionnement du commutateur d'apprentissage et de stockage (68) un mode d'apprentissage par lequel l'unité de commande (44) enregistre des informations sur l'exécution manuelle de la séquence, l'unité de commande (44) activant lors d'un second actionnement du commutateur d'apprentissage et de stockage, une fois que les informations de séquence sont enregistrées, un mode de stockage par lequel les informations sont stockées dans une mémoire de l'unité de commande (44), **caractérisé en ce que** l'unité de commande (44) efface de sa mémoire une séquence stockée lorsque le commutateur d'apprentissage et de stockage (68) est actionné une seconde fois, sans que des opérations manuelles aient été effectuées entre-temps.

2. Système de gestion de fonctions selon la revendication 1, **caractérisé en ce que** le système de gestion de fonctions est opérationnel uniquement dans le cas où le véhicule se déplace sur le terrain.

3. Système de gestion de fonctions selon la revendication 1 ou 2, **caractérisé en ce que** le système de gestion de fonctions n'est opérationnel que dans les cas où la boîte de vitesses (18) du véhicule se trouve en marche avant.

4. Système de gestion de fonctions selon l'une quelconque des revendications 1 à 3, **caractérisé en ce qu'**un élément sélecteur de séquence (56) pouvant être actionné manuellement et relié à l'unité de commande (44) est prévu, **en ce que** l'unité de commande (44) sélectionne, en fonction de l'état de l'élément de sélection de séquence (56), une ou plusieurs séquences opérationnelles stockées ou apprises.

5. Système de gestion de fonctions selon l'une quelconque des revendications 1 à 4, **caractérisé en ce qu'**un commutateur (56) pouvant être actionné par l'opérateur et relié à l'unité de commande (44) est prévu et **en ce que** l'unité de commande (44) exécute automatiquement une séquence d'opérations chaque fois que le commutateur (56) est actionné.

6. Système de gestion de fonctions selon l'une quelconque des revendications 1 à 5, **caractérisé en ce que**, lors de l'exécution du mode d'apprentissage en réponse à une première séquence d'actions effectuée manuellement sur le ou les éléments de commande (46), au moins une fonction exécute une première séquence d'opérations et l'unité de commande (44) stocke d'une part des informations concernant la première séquence d'opérations et d'autre part des informations concernant l'intervalle de distance, que le véhicule a parcouru entre chaque opération de la première séquence d'opérations, et en réponse à une seconde séquence d'actions effectuée manuellement sur le ou les éléments de commande (46), au moins une fonction exécute une seconde séquence d'opérations et l'unité de commande (44) stocke d'une part des informations concernant la seconde séquence d'opérations et d'autre part des informations concernant l'intervalle de distance, que le véhicule a parcouru entre les différentes opérations de la seconde séquence d'opérations.

7. Système de gestion de fonctions selon l'une quelconque des revendications 4 à 6, **caractérisé en ce que** le commutateur ou l'élément de sélection de séquence est un commutateur à bascule (56), qui peut basculer d'une position de repos centrale vers deux directions, afin de démarrer ou de sélectionner à chaque fois une des deux séquences d'opérations stockées.

8. Système de gestion de fonctions selon l'une quelconque des revendications 1 à 7, **caractérisé en ce qu'**il est prévu un écran d'affichage (48, 62) en liaison avec l'unité de commande (44), par lequel les informations de séquence stockées peuvent être visualisées.

9. Système de gestion de fonctions selon la revendication 8, **caractérisé en ce que** l'unité de commande (44) affiche automatiquement des informations de séquence stockées sur l'écran (48, 62) lorsque le système de gestion de fonctions est enclenché.

10. Système de gestion de fonctions selon l'une quelconque des revendications 1 à 9, **caractérisé en ce qu'**un commutateur (57) en liaison avec l'unité de commande (44) est prévu pour que l'unité de commande (44) interrompe le stockage de séquence d'informations et/ou l'exécution automatique des séquences stockées lorsque le commutateur (57) est actionné.

11. Système de gestion de fonctions selon la revendication 10, **caractérisé en ce que** le commutateur (57) est en liaison effective avec une pédale d'embrayage (58) du véhicule.

12. Système de gestion de fonctions selon l'une quelconque des revendications 1 à 11, **caractérisé en ce que** l'unité de commande (44) interrompt l'exécution d'une première séquence apprise dès qu'un commutateur de sélection de séquence est mis dans une position dans laquelle une seconde séquence apprise est sélectionnée.
